# EUROPEAN PATENT APPLICATION

(11) **EP 4 796 611 A1**
(43) Date of publication of application: **26.08.2026**
(21) Application number: 24879566.8
(22) Date of filing: 02.10.2024
(51) Int. Cl.: C09K 3/14, F16D 69/02

(54) **FRICTION MATERIAL**

(30) Priority: 19.10.2023 JP 2023180180
(71) Applicant: Nisshinbo Brake Inc., Chuo-ku Tokyo 103-8650 (JP)
(72) Inventor: YANAOKA, Toshihiro, Ora-gun, Gunma 370-0614 (JP); MATSUZAWA, Takuya, Ora-gun, Gunma 370-0614 (JP); NATSUME, Tomoaki, Ora-gun, Gunma 370-0614 (JP); OGAWA, Yutaka, Ora-gun, Gunma 370-0614 (JP)
(74) Representative: Stolmár & Partner Patentanwälte PartG mbB
(86) International application number: PCT/JP2024/035245
(87) International publication number: WO 2025/084140

(57) **Abstract**

[Problem to be Solved]

To provide a friction material molded from a copper free non-asbestos-organic (NAO) friction material composition for use in disc brakes of automobiles and the like, which exhibits excellent fade resistance and wear resistance, as well as good moldability.

[Means to Solve]

The friction material molded from the copper free NAO friction material composition for use in disc brake pads, the composition including a binder, a fibrous base material, an organic friction modifier, an inorganic friction modifier, and a lubricant, wherein the friction material composition contains 5 to 10 weight% of aramid fibers as the fibrous base material, 5 to 15 weight% of a non-whisker-type titanate and 0.5 to 5 weight% of calcium silicate hydrate particles as the inorganic friction modifier, and 1 to 4 weight% of a metal sulfide as the lubricant, all relative to the total amount of the friction material composition.

## Description

### [Field of Invention]

The present invention relates to a friction material and more particularly to a friction material molded from a copper free, non-asbestos-organic (NAO) friction material composition for use in disc brake pads.

### [Background of Invention]

Conventionally, disc brakes have been used as braking devices for passenger vehicles, and disc brake pads, in which a friction material is attached to a metal base member, have been used as friction members.

In recent years, brake quietness has been increasingly demanded, and disc brake pads using friction materials that do not contain steel-based fibers such as steel fibers or stainless steel fibers as a fibrous base material and that generate less brake noise, have come to be widely used.

Patent Document 1 discloses a friction material including a fibrous base material, a friction modifier, and a binder and containing 0.5 mass% or less of copper relative to the total amount of the friction material composition, and lithium carbonate.

According to Patent Document 1, the disclosed invention can offer a friction material which imposes a low environmental burden and exhibits improved friction characteristics, particularly fade resistance and wear resistance.

### [Prior Art]

### [Patent Document]

Japanese Unexamined Patent Application Publication No. 2016-135830

### [Summary of the Invention]

### [Problems to be Solved by the Invention]

The friction material described in Patent Document 1 contains, as an essential component, about 5 to 20 weight% of a copper component, such as fibers or particles of copper or a copper alloy, relative to the total amount of the friction material composition, in order to ensure fade resistance and wear resistance.

However, in recent years, it has been suggested that friction materials containing even a small amount of such copper components may discharge copper as wear debris during braking and that the discharged copper may flow into rivers, lakes, and oceans, thereby potentially polluting aquatic environments and leading to a demand to reduce the amount of copper components.

The present invention aims to provide a friction material for use in disc brakes of automobiles and the like, which exhibits excellent fade resistance and wear resistance, as well as good moldability, even without containing any copper component.

### [Means to Solve the Problems]

As a result of extensive studies conducted to solve the above problems, the inventors of the present invention have found that a friction material having excellent fade resistance and wear resistance, as well as good moldability, can be obtained by adding predetermined amounts of aramid fibers as a fibrous base material, non-whisker-type titanates and calcium silicate hydrate particles as inorganic friction modifiers, and metal sulfides as lubricants, all relative to the total amount of the friction material composition, thereby completing the present invention.

The present invention is directed to a friction material molded from a copper-free NAO friction material composition for use in disc brake pads, the composition including a binder, a fibrous base material, an organic friction modifier, an inorganic friction modifier, and a lubricant and is based on the following technical features.
(1) In a friction material molded from a copper free non-asbestos-organic (NAO) friction material composition for use in disc brake pads, containing a binder, a fibrous base, an organic friction modifier, an inorganic friction modifier, and a lubricant, the friction material composition is characterized by containing 5 to 10 weight% of aramid fibers as the fibrous base material relative to the total amount of the friction material composition, 5 to 15 weight% of a non-whisker-type titanate as the inorganic friction modifier relative to the total amount of the friction material composition, 0.5 to 5 weight% of calcium silicate hydrate particles as the inorganic friction modifier relative to the total amount of the friction material composition, and 1 to 4 weight% of a metal sulfide as the lubricant relative to the total amount of the friction material composition.
(2) The above-described friction material composition may contain 0.5 to 2 weight% of polytetrafluoroethylene particles as the organic friction modifier relative to the total amount of the friction material composition.

### [Effects of the Invention]

According to the present invention, it is possible to provide a friction material molded from a copper-free NAO friction material composition for use in disc brakes of automobiles and the like, the friction material exhibiting excellent fade resistance and wear resistance, as well as good moldability.

### [Mode for carrying out the invention]

In embodiments of the present invention, 5 to 10 weight% of aramid fibers as a fibrous base material, 5 to 15 weight% of a non-whisker-type titanate as an inorganic friction modifier, 0.5 to 5 weight% of calcium silicate hydrate particles as another inorganic friction modifier, and 1 to 4 weight% of a metal sulfide as a lubricant are added to a friction material composition, all relative to the total amount of the friction material composition.

When the content of calcium silicate hydrate particles is within the above range, the friction material having excellent fade resistance can be obtained.

When the content of calcium silicate hydrate particles is less than 0.5 weight% relative to the total amount of the friction material composition, sufficient fade resistance cannot be obtained, and when the content exceeds 5 weight% relative to the toral amount of the friction material composition, the moldability deteriorates.

As the calcium silicate hydrate particles, for example, Promaxon-D manufactured by Promat International N.V., may be used.

When the contents of the aramid fibers and the non-whisker-type titanate are within the above ranges, sufficient mechanical strength can be imparted to the friction material, and wear resistance is improved.

When the content of aramid fibers is less than 5 weight% relative to the total amount of the friction material composition, sufficient wear resistance cannot be obtained, and when the content exceeds 10 weight% relative to the total amount of the friction material composition, mixing tends to become non-uniform.

As the aramid fibers, for example, Twaron 1099, Twaron 1095, and Twaron 3091 manufactured by Teijin Limited, and Kevlar 1F538 and Kevlar 1F1710 manufactured by Toray DuPont Co., Ltd. may be used.

When the content of the non-whisker-type titanate is less than 5 weight% relative to the total amount of the friction material composition, sufficient wear resistance cannot be obtained, and when the content exceeds 15 weight% relative to the total amount of the friction material composition, the alkali components contained in the titanate inhibit the curing of the binder, resulting in deteriorated moldability.

As the non-whisker-type titanate, potassium titanate, magnesium potassium titanate, and lithium potassium titanate having plate-like, columnar, particulate, or multi-protrusion shapes may be used.

As the non-whisker-type titanate, for example, TERRACESS JP (potassium titanate), TERRACESS TF-S (potassium titanate), TERRACESS L (lithium potassium titanate), TERRACESS PS (magnesium potassium titanate), and TERRACESS DSR (sodium titanate), all manufactured by Otsuka Chemical Co., Ltd.; TXAX-MA (potassium titanate) manufactured by Kubota Corporation; and TOFIX-S (potassium titanate) manufactured by Toho Material Co., Ltd. may be used.

When the content of the metal sulfide is within the above range, the lubricating effect of the metal sulfide improves the releasability of the friction material from the molding die, thereby enabling good moldability.

When the content of the metal sulfide is less than 1 weight% relative to the total amount of the friction material composition, good moldability cannot be obtained, and when the content exceeds 4 weight% relative to the total amount of the friction material composition, fade resistance deteriorates.

As the metal sulfide, molybdenum disulfide, tin sulfide, iron sulfide, and zinc sulfide may be used.

Furthermore, the friction material composition according to the embodiments of the present invention may further contain 0.5 to 2 weight% of polytetrafluoroethylene particles as an organic friction modifier, relative to the total amount of the friction material composition.

When the content of the polytetrafluoroethylene particles is within the above range, the non-adhesive effect of the polytetrafluoroethylene particles improves the releasability of the friction material from the molding die, thereby enabling better moldability.

As the polytetrafluoroethylene particles, for example, TLP10F-1 and MP-1300-J manufactured by Chemours-Mitsui Fluoroproducts Co.,Ltd.; the Lubron L series manufactured by Daikin Industries, Ltd.; and the TFW-P series manufactured by Seishin Enterprise Co., Ltd. may be used.

The friction material of the embodiment of the present invention is composed of the friction material composition including, in addition to the above-described aramid fibers, a non-whisker-type titanate, calcium silicate hydrate particles, a metal sulfide, and polytetrafluoroethylene particles, other components commonly used in friction materials such as a binder, a fibrous base material, a lubricant, an inorganic friction modifier, an organic friction modifier, a pH modifier, and a filler.

As the binder, one type or a combination of two or more types of materials commonly used in friction materials may be used, such as a straight phenolic resin, a cashew oil-modified phenolic resin, an acrylic rubber-modified phenolic resin, a silicone rubber-modified phenolic resin, a nitrile rubber (NBR)-modified phenolic resin, a phenol-aralkyl resin (aralkyl-modified phenolic resin), a fluoropolymer-dispersed phenolic resin, and a silicone rubber-dispersed phenolic resin.

The content of the binder is preferably 6 to 10 weight% relative to the total amount of the friction material composition, and more preferably 7 to 9 weight% relative to the total amount of the friction material composition.

As the fibrous base material, in addition to the above-mentioned aramid fibers, one type or a combination of two or more types of organic fibers commonly used in friction materials such as cellulose fibers, polyparaphenylene benzobisoxazole fibers, and acrylic fibers may be used.

The content of the fibrous base material, including the above-mentioned aramid fibers, is preferably 5 to 12 weight% relative to the total amount of the friction material composition, and more preferably 6 to 10 weight% relative to the total amount of the friction material composition.

As the lubricant, in addition to the above-mentioned metal sulfides, one type or a combination of two or more types of carbon-based lubricants such as a petroleum coke, an elastic graphitized carbon, artificial graphite particles, and natural graphite particles may be used.

The content of the lubricant, including the above-mentioned metal sulfides, is preferably 2 to 9 weight% relative to the total amount of the friction material composition, and more preferably 3 to 8 weight% relative to the total amount of the friction material composition.

As the inorganic friction modifier, in addition to the above-mentioned non-whisker-type titanate and calcium silicate hydrate particles, one type or a combination of two or more types of particulate inorganic friction modifiers such as a mica including a vermiculite, a phlogopite, and a muscovite, a triiron tetraoxide, a calcium silicate, a magnesium oxide, a zirconium silicate, a zirconium oxide, a γ-alumina, an α-alumina, and a silicon carbide, and fibrous inorganic friction modifiers such as a wollastonite, a sepiolite, basalt fibers, glass fibers, biosoluble man-made mineral fibers, and a rock wool may be used.

The content of the inorganic friction modifier, including the above-mentioned non-whisker-type titanate and calcium silicate hydrate particles, is preferably 20 to 30 weight% relative to the total amount of the friction material composition, and more preferably 22 to 26 weight% relative to the total amount of the friction material composition.

As the organic friction modifier, in addition to the above-mentioned polytetrafluoroethylene particles, one type or a combination of two or more types of organic friction modifiers commonly used in friction materials, such as a cashew dust, ground tire tread rubber powders, and vulcanized or unvulcanized rubber powders such as a nitrile rubber, an acrylic rubber, a silicone rubber, and a butyl rubber, may be used.

The content of the organic friction modifier, including the above-mentioned polytetrafluoroethylene particles, is preferably 3 to 8 weight% relative to the total amount of the friction material composition, and more preferably 4 to 7 weight% relative to the total amount of the friction material composition.

As the pH modifier, a pH modifier commonly used in friction materials, such as a calcium hydroxide, may be used.

The content of the pH modifier is preferably 1 to 6 weight% relative to the total amount of the friction material composition, and more preferably 2 to 5 weight% relative to the total amount of the friction material composition.

As the balance of the friction material composition, fillers such as a barium sulfate and a calcium carbonate are used.

The friction material in the embodiments of the present invention used in the disc brake pad is manufactured through a mixing step in which a predetermined amount of a friction material composition is uniformly mixed using a mixer, a heat press molding step in which the resulting friction material raw material mixture and a back plate, which has been separately pre-cleaned, surface-treated, and coated with an adhesive, are superposed and placed into a heat press mold, followed by heating and pressing to form a molded product, a heat treatment step in which the molded product is heated to complete the curing reaction of the binder, a coating step in which a coating is applied, a baking step in which the paint is baked, and a grinding step in which a friction surface is formed.

As needed, a granulation step in which the friction material raw material mixture is granulated, a kneading step in which the friction material raw material mixture is kneaded, and a preliminary molding step in which the friction material raw material mixture or the granulated material obtained in the granulation step and the kneaded material obtained in the kneading step are placed into a preliminary mold to form a preliminary molded product, may be carried out before the heat press molding step, and a scorch step may be carried out after the heat press molding step.

### [Embodiments]

Hereinafter, examples and comparative examples are shown to specifically describe the present invention; however, the present invention is not limited to these examples.

[Manufacturing Method for Friction Material in Embodiments 1 to 20 and Comparative Examples 1 to 8] The friction material compositions having the formulation shown in Tables 1 to 3 were mixed for 5 minutes using a Ledige mixer and then preliminarily molded by applying a pressure of 30 MPa for 10 seconds in a molding die. The resulting preliminary molded product was placed on a steel back plate that had been pre-cleaned, surface-treated, and coated with an adhesive and was then molded in a heat press mold at a molding temperature of 150°C and a molding pressure of 40 MPa for 10 minutes, followed by a heat treatment (post-curing) at 200°C for 5 hours and surface grinding to form a friction surface, thereby obtaining a friction material used to produce a disc brake pad for a passenger vehicle.

**[TABLE 1]**

| | | Embodiments | | | | | | | | | |
|---|---|---|---|---|---|---|---|---|---|---|---|
| | | 1 | 2 | 3 | 4 | 5 | 6 | 7 | 8 | 9 | 10 |
| Binder | Straight phenolic resin | 8 | 8 | 8 | 8 | 8 | 8 | 8 | 8 | 8 | 8 |
| Fibrous base | Aramid fiber | 5 | 6 | 7 | 10 | 7 | 7 | 7 | 7 | 7 | 7 |
| Lubricant | Zinc sulfide | 2 | 2 | 2 | 2 | 2 | 2 | 2 | 2 | 2 | 2 |
| | Iron sulfide | 0 | 0 | 0 | 0 | 0 | 0 | 0 | 0 | 0 | 0 |
| | Graphite | 2 | 2 | 2 | 2 | 2 | 2 | 2 | 2 | 2 | 2 |
| | Coke | 2 | 2 | 2 | 2 | 2 | 2 | 2 | 2 | 2 | 2 |
| Inorganic friction modifier | Zirconium silicate | 3 | 3 | 3 | 3 | 3 | 3 | 3 | 3 | 3 | 3 |
| | Zirconium oxide | 5 | 5 | 5 | 5 | 5 | 5 | 5 | 5 | 5 | 5 |
| | Mica | 3 | 3 | 3 | 3 | 3 | 3 | 3 | 3 | 3 | 3 |
| | Plate-like potassium titanate | 10 | 10 | 10 | 10 | 5 | 8 | 12 | 15 | 10 | 10 |
| | Calcium silicate hydrate | 2 | 2 | 2 | 2 | 2 | 2 | 2 | 0.5 | 1 | 1 |
| Organic friction modifier | Cashew dust | 3 | 3 | 3 | 3 | 3 | 3 | 3 | 3 | 3 | 3 |
| | Ground tire tread rubber powder | 2 | 2 | 2 | 2 | 2 | 2 | 2 | 2 | 2 | 2 |
| | Polytetrafluoroethylene particle | 0 | 0 | 0 | 0 | 0 | 0 | 0 | 0 | 0 | 0 |
| pH modifier | Calcium hydroxide | 3 | 3 | 3 | 3 | 3 | 3 | 3 | 3 | 3 | 3 |
| Filler | Barium sulfate | 50 | 49 | 48 | 45 | 53 | 50 | 46 | 43 | 49.5 | 49 |
| Total | | 100 | 100 | 100 | 100 | 100 | 100 | 100 | 100 | 100 | 100 |

**[TABLE 2]**

| | | Embodiments | | | | | | | | | |
|---|---|---|---|---|---|---|---|---|---|---|---|
| | | 11 | 12 | 13 | 14 | 15 | 16 | 17 | 18 | 19 | 20 |
| Binder | Straight phenolic resin | 8 | 8 | 8 | 8 | 8 | 8 | 8 | 8 | 8 | 8 |
| Fibrous base | Aramid fiber | 7 | 7 | 7 | 7 | 7 | 7 | 7 | 7 | 7 | 7 |
| Lubricant | Zinc sulfide | 2 | 2 | 1 | 4 | 0 | 1 | 1 | 1 | 1 | 1 |
| | Iron sulfide | 0 | 0 | 0 | 0 | 2 | 0 | 0 | 0 | 0 | 0 |
| | Graphite | 2 | 2 | 2 | 2 | 2 | 2 | 2 | 2 | 2 | 2 |
| | Coke | 2 | 2 | 2 | 2 | 2 | 2 | 2 | 2 | 2 | 2 |
| Inorganic friction modifier | Zirconium silicate | 3 | 3 | 3 | 3 | 3 | 3 | 3 | 3 | 3 | 3 |
| | Zirconium oxide | 5 | 5 | 5 | 5 | 5 | 5 | 5 | 5 | 5 | 5 |
| | Mica | 3 | 3 | 3 | 3 | 3 | 3 | 3 | 3 | 3 | 3 |
| | Plate-like potassium titanate | 10 | 10 | 10 | 10 | 10 | 10 | 10 | 10 | 10 | 10 |
| | Calcium silicate hydrate | 4 | 5 | 2 | 2 | 2 | 2 | 2 | 2 | 2 | 2 |
| Organic friction modifier | Cashew dust | 3 | 3 | 3 | 3 | 3 | 3 | 3 | 3 | 3 | 3 |
| | Ground tire tread rubber powder | 2 | 2 | 2 | 2 | 2 | 2 | 2 | 2 | 2 | 2 |
| | Polytetrafluoroethylene particle | 0 | 0 | 0 | 0 | 0 | 0.3 | 0.5 | 1 | 2 | 3 |
| pH modifier | Calcium hydroxide | 3 | 3 | 3 | 3 | 3 | 3 | 3 | 3 | 3 | 3 |
| Filler | Barium sulfate | 46 | 45 | 49 | 46 | 48 | 48.7 | 48.5 | 48 | 47 | 46 |
| Total | | 100 | 100 | 100 | 100 | 100 | 100 | 100 | 100 | 100 | 100 |

**[TABLE 3]**

| | | Comparative Examples | | | | | | | |
|---|---|---|---|---|---|---|---|---|---|
| | | 1 | 2 | 3 | 4 | 5 | 6 | 7 | 8 |
| Binder | Straight phenolic resin | 8 | 8 | 8 | 8 | 8 | 8 | 8 | 8 |
| Fibrous base | Aramid fiber | 4 | 11 | 7 | 7 | 7 | 7 | 7 | 7 |
| Lubricant | Zinc sulfide | 2 | 2 | 2 | 2 | 2 | 2 | 0.5 | 5 |
| | Iron sulfide | 0 | 0 | 0 | 0 | 0 | 0 | 0 | 0 |
| | Graphite | 2 | 2 | 2 | 2 | 2 | 2 | 2 | 2 |
| | Coke | 2 | 2 | 2 | 2 | 2 | 2 | 2 | 2 |
| Inorganic friction modifier | Zirconium silicate | 3 | 3 | 3 | 3 | 3 | 3 | 3 | 3 |
| | Zirconium oxide | 5 | 5 | 5 | 5 | 5 | 5 | 5 | 5 |
| | Mica | 3 | 3 | 3 | 3 | 3 | 3 | 3 | 3 |
| | Plate-like potassium titanate | 10 | 10 | 4 | 16 | 10 | 10 | 10 | 10 |
| | Calcium silicate hydrate | 2 | 2 | 2 | 2 | 0.3 | 6 | 2 | 2 |
| Organic friction modifier | Cashew dust | 3 | 3 | 3 | 3 | 3 | 3 | 3 | 3 |
| | Ground tire tread rubber powder | 2 | 2 | 2 | 2 | 2 | 2 | 2 | 2 |
| | Polytetrafluoroethylene particle | 0 | 0 | 0 | 0 | 0 | 0 | 0 | 0 |
| pH modifier | Calcium hydroxide | 3 | 3 | 3 | 3 | 3 | 3 | 3 | 3 |
| Filler | Barium sulfate | 51 | 44 | 54 | 42 | 49.7 | 44 | 49.5 | 45 |
| Total | | 100 | 100 | 100 | 100 | 100 | 100 | 100 | 100 |

It should be noted that, as shown in TABLES 1 to 3, the composition ratios of the friction materials in the respective examples of the present invention all fall within the ranges described in the above-mentioned embodiments, whereas the composition ratio of at least one component in the friction materials of the comparative examples falls outside the ranges described in the above-mentioned embodiment.

For each of the friction materials in the respective examples and comparative examples, evaluations were conducted for each item, including fade resistance, wear resistance, and moldability. The evaluation results are shown in Tables 4 to 6. Here, the evaluation criteria for each item are as follows.

<Fade Resistance> In accordance with JASO C406 "Passenger Cars - Braking device - Dynamometer Test Procedure," fade resistance was evaluated by measuring the minimum coefficient of friction in the first fade test, and the results were rated based on the following criteria.
Excellent: 0.30 or higher
Good: 0.25 or higher and less than 0.30
Fair: 0.20 or higher and less than 0.25
Poor: less than 0.20
- : Not evaluated due to mixing failure or molding failure

<Wear Resistance> In accordance with JASO C427 "Automobiles Parts - Brake Linings and Disc Brake Pads - Wear Test Procedure On Inertia Dynamometer," the wear amount (mm) of the friction material was measured under the conditions of an initial braking speed of 50 km/h, a deceleration of 0.3 G, an appropriate number of braking cycles, and a pre-braking temperature of 200°C, and the resulting amount was converted to the wear amount per 1,000 braking cycles and evaluated based on the following criteria.
Excellent: less than 0.15 mm
Good: 0.15 mm or more and less than 0.20 mm
Fair: 0.20 mm or more and less than 0.50 mm
Poor: 0.50 mm or more
- : Not evaluated due to mixing failure or molding failure

<Moldability> Moldability was evaluated by visually inspecting the friction material for the presence or absence of cracks, and the results were rated based on the following criteria.
Good: No cracks
Fair: Presence of fine cracks
Poor: Presence of large cracks

<Mixing Condition> The mixing condition was evaluated by visually inspecting the state of the mixture, and the results were rated based on the following criteria.
Good: No mixing failure
Poor: Mixing failure present

**[TABLE 4]**

| | | Embodiments | | | | | | | | | |
|---|---|---|---|---|---|---|---|---|---|---|---|
| | | 1 | 2 | 3 | 4 | 5 | 6 | 7 | 8 | 9 | 10 |
| | Fade resistance | Good | Excellent | Excellent | Excellent | Good | Excellent | Excellent | Good | Fair | Good |
| Evaluation Results | Wear resistance | Fair | Good | Excellent | Excellent | Fair | Good | Excellent | Good | Good | Excellent |
| | Moldability | Good | Good | Good | Good | Good | Good | Good | Good | Good | Good |
| | Mixing Condition | Good | Good | Good | Good | Good | Good | Good | Good | Good | Good |

**[TABLE 5]**

| | | Embodiments | | | | | | | | | |
|---|---|---|---|---|---|---|---|---|---|---|---|
| | | 11 | 12 | 13 | 14 | 15 | 16 | 17 | 18 | 19 | 20 |
| | Fade resistance | Excellent | Excellent | Good | Fair | Excellent | Good | Good | Good | Good | Fair |
| Evaluation Results | Wear resistance | Good | Fair | Good | Excellent | Excellent | Good | Good | Excellent | Excellent | Excellent |
| | Moldability | Good | Good | Fair | Good | Good | Fair | Good | Good | Good | Good |
| | Mixing Condition | Good | Good | Good | Good | Good | Good | Good | Good | Good | Good |

**[TABLE 6]**

| Comparative Examples | | | | | | | |
|---|---|---|---|---|---|---|---|
| 1 | 2 | 3 | 4 | 5 | 6 | 7 | 8 |
| Fair | - | Fair | - | Poor | - | - | Poor |
| Poor | - | Poor | - | Fair | - | - | Excellent |
| Good | - | Good | Poor | Good | Poor | Poor | Good |
| Good | Poor | Good | Good | Good | Good | Good | Good |

From TABLES 4 to 6, it can be seen that the friction materials of the respective embodiments of the present invention achieved favorable evaluation results in all items, i.e., fade resistance, wear resistance, and moldability. In contrast, it can also be seen that the friction materials of the comparative examples received an unfavorable evaluation result in at least one of these items, being rated as poor or lower.

### [Industrial Applicability]

According to the present invention, in a friction material molded from a copper free NAO friction material composition for use in disc brake pads, it is possible to provide a friction material that exhibits excellent fade resistance and wear resistance, as well as good moldability, making it extremely valuable in practical applications.

## Claims

1. A friction material molded from a copper free non-asbestos-organic (NAO) friction material composition for use in disc brake pads, comprising a binder, a fibrous base, an organic friction modifier, an inorganic friction modifier, and a lubricant,
wherein the friction material composition contains:
5 to 10 weight% of aramid fibers as the fibrous base material relative to the total amount of the friction material composition;
5 to 15 weight% of a non-whisker-type titanate as the inorganic friction modifier relative to the total amount of the friction material composition;
0.5 to 5 weight% of calcium silicate hydrate particles as the inorganic friction modifier relative to the total amount of the friction material composition; and
1 to 4 weight% of a metal sulfide as the lubricant relative to the total amount of the friction material composition.

2. The friction material according to claim 1,
wherein the friction material composition contains 0.5 to 2 weight% of polytetrafluoroethylene particles as the organic friction modifier relative to the total amount of the friction material composition.
